# EUROPÄISCHE PATENTANMELDUNG

(11) **EP 3 896 040 A1**
(43) Veröffentlichungstag der Anmeldung: **20.10.2021**
(21) Anmeldenummer: 21151165.4
(22) Anmeldetag: 12.01.2021
(51) Int. Cl.: C03C 17/00, B41J 3/407, B65D 23/08, C03C 17/28

(54) **VERFAHREN UND VORRICHTUNG ZUM HERSTELLEN VON FLASCHEN MIT SCHEUERRÄNDERN**

(30) Priorität: 14.04.2020 DE 102020110136
(71) Anmelder: Krones AG, 93073 Neutraubling (DE)
(72) Erfinder: Gertlowski, Georg, 93073 Neutraubling (DE); Gette, Viktor, 93073 Neutraubling (DE); Kursawe, Andreas, 93073 Neutraubling (DE); Bielmeier, Heinrich, 93073 Neutraubling (DE)
(74) Vertreter: Grünecker Patent- und Rechtsanwälte PartG mbB

(57) **Zusammenfassung**

Beschrieben werden ein Verfahren und eine Vorrichtung zum Herstellen von Flaschen mit Scheuerrändern. Hierzu stellt man Flaschen, insbesondere solche aus Glas, bereit, wobei der Rumpf der Flaschen jeweils einen Rumpfabschnitt mit einer im Radialschnitt im Wesentlichen ebenen Außenkontur umfasst. Dadurch, dass man wenigstens einen umfänglich verlaufenden Scheuerrand in einem axialen Teilbereich des Rumpfabschnitts aufdruckt, können die Flaschen auf effiziente und flexibel anpassbare Weise gegen mechanische Beschädigungen aufgrund von Kollisionen mit anderen Flaschen, Führungs- und/oder Transportelementen geschützt werden.

## Beschreibung

Die Erfindung betrifft ein Verfahren und eine Vorrichtung zum Herstellen von Flaschen gemäß dem Oberbegriff des Anspruchs 1 bzw. 11.

Behälter für Flüssigkeiten, insbesondere Mehrwegflaschen, aus Glas oder Kunststoff werden nach mehreren Produktions- und Gebrauchszyklen infolge der starken Beanspruchung in den Abfüllanlagen sowie auf dem Transport zum und vom Verbraucher häufig unansehnlich. Insbesondere durch Kollisionen der Flaschen in den Abfüllanlagen bilden sich vorrangig im oberen und unteren Randbereich des in der Regel im Wesentlichen zylindrischen Flaschenrumpfes Scheuerstellen, Kratzer, Absplitterungen oder dergleichen Beschädigungen aus.

Als Behelf kann in Abfüllbetrieben auf Mehrwegflaschen ein dünner Film aus flüssigem Kunststoff, z. B. einem Siloxan, aufgebracht werden, der die Kratzer und Scheuerstellen weitgehend abdeckt und den Flaschen ein neuwertiges Erscheinungsbild verleiht, wie beispielsweise aus DE 2941105 A1 bekannt ist.

Auch wurde bereits vorgeschlagen, die Mehrwegflaschen bei jedem Durchlauf / Produktionszyklus in der Abfüllanlage mit einem flüssigen Kaltendvergütungsmittel zu benetzen, wie es ähnlich in Glashütten auf Flaschen aufgebracht wird. Dadurch soll ein bei der Glasherstellung erzeugter Schutzfilm aufgefrischt / aufrechterhalten werden.

Schließlich ist es bekannt, auf Flaschen einen Farbfilm aufzutragen sowie flüssige oder pastöse Kunststoffe als Schutzmantel und zur Erhöhung der Stabilität. Derartige sowie weitere flüssige oder pastöse Mittel, die zum Auftragen auf die Oberfläche von Flaschen oder dgl. geeignet sind, werden nachstehend der Einfachheit halber als Beschichtungsmittel bezeichnet.

Zum Auftragen solcher flüssigen Beschichtungsmittel auf Flaschen sind bereits spezielle Maschinen mit einem eigenen Antrieb und einem die Flaschen auf einer Kreisbogenbahn bewegenden Transportstern bekannt geworden, beispielsweise in DE 882671 A1. Die Flaschen im Transportstern werden demnach durch Abwälzen auf einem feststehenden Reibsegment in Eigenrotation versetzt und durch mit dem Transportstern umlaufende Rollen oder Gleitschuhe aus elastischem Material beaufschlagt, die fortlaufend mit dem Beschichtungsmittel benetzt werden.

Alternativ ist eine Etikettiermaschine aus DE 3008096 A1 bekannt, wonach eine Auftragseinrichtung für ein Beschichtungsmittel auf Flaschen einem Drehtisch zugeordnet ist und die Flaschen vor dem Eintreffen am Etikettieraggregat beschichtet. Die Auftragseinrichtung ist in die Etikettiermaschine integriert, wodurch der Platzbedarf und die Investitionskosten gegenüber separaten Beschichtungseinheiten reduziert werden konnten.

Zudem konnte dadurch der Flaschentransport verbessert werden, da zum Zuteilen der Flaschen eine Einlaufschnecke vorhanden ist und die Flaschen durch die Transportsterne und den mit gesteuerten Drehtellern und heb- und senkbaren Zentrierglocken versehenen Drehtisch auch bei hohen Leistungen exakt und schonend transportiert werden können.

Ungünstig ist jedoch die erhöhte Verschmutzungsgefahr im Bereich der Etikettiermaschine aufgrund der integrierten Beschichtung der Flaschen, sowie eine mögliche Beeinträchtigung der Etikettenhaftung durch das kurz zuvor aufgebrachte Beschichtungsmittel. Außerdem steht ein beträchtlicher Teil des Behandlungswegs am Drehtisch dann nicht mehr für die Etikettierung zur Verfügung, was komplexen Etikettenausstattungen entgegensteht.

Aus DE4012331 A1 sind ferner ein Verfahren und eine Vorrichtung zum Aufbringen eines Beschichtungsmittels auf Flaschen bekannt, bei denen die Flaschen mit Abstand über einen Teil der Transportstrecke im Auslaufbereich einer Etikettiermaschine / eines Auslaufsterns befördert werden und dabei das Beschichtungsmittel aufnehmen. Um ein gleichmäßiges Aufbringen von Beschichtungsmittel mit möglichst geringen Flüssigkeitsmengen zu ermöglichen, ist dort vorgesehen, dass das Beschichtungsmittel mittels Sprühdüsen, die sich in einem Abstand zum Auslaufstern mitbewegen, auf ein Auftragselement, beispielsweise einen Schwamm, aufgebracht wird.

Obwohl die genannten Verfahren und Vorrichtungen prinzipiell geeignete Beschichtungen auf Scheuerdefekten oder dergleichen Schadstellen an noch nicht etikettierten Flaschen erzeugen können, bleiben Nachteile hinsichtlich des apparativen Aufwands, der räumlichen Integrierung in Abfüllanlagen, Verschmutzungen mit Beschichtungsmittel und dessen Materialverbrauch bestehen.

Zum Schutz von Etiketten, Aufdrucken zu Dekorationszwecken oder dergleichen werden Flaschen gegebenenfalls mit wulstartig über und unter den zu schützenden Wandbereichen vorstehenden Scheuerrändern hergestellt. In deren Bereich ist das Wandmaterial der Flaschen dann nach außen hin verdickt, was einen zusätzlichen Materialaufwand verursacht und zu Spannungsrissen in der Flaschenwand führen kann.

Es besteht daher der Bedarf für Verfahren und Vorrichtung zum Herstellen von Flaschen mit Scheuerrändern, bei den wenigstens eines der oben genannten Probleme vermieden oder zumindest abgemildert werden kann.

Die gestellte Aufgabe wird mit einem Verfahren nach Anspruch 1 und mit einer Vorrichtung nach Anspruch 11 gelöst. Bevorzugte Ausführungsformen sind in den Unteransprüchen definiert. Die Vorrichtung kann die zur Durchführung der vorteilhaften Ausführungsformen des Verfahrens beschriebenen Vorrichtungsbestandteile aufweisen.

Demnach dient das Verfahren zum Herstellen von Flaschen mit Scheuerrändern. Hierzu stellt man die Flaschen, insbesondere solche aus Glas, bereit, wobei der Rumpf der Flaschen jeweils einen Rumpfabschnitt mit einer im Radialschnitt im Wesentlichen ebenen Außenkontur umfasst.

Erfindungsgemäß druckt man wenigstens einen umfänglich verlaufenden Scheuerrand in einem axialen Teilbereich des Rumpfabschnitts auf.

Der Scheuerrand kann an Flaschen aus Neuglas oder Neukunststoff erstmalig angebracht werden, aber auch an bereits benutzten Mehrwegflaschen aus Glas oder Kunststoff im Sinne einer Ausbesserung / Wiederherstellung eines bereits bestehenden Scheuerrands.

Die Flaschen können Einwegflaschen sein, deren Etiketten, Dekorationsaufdrucke und/oder Etikettierungsaufdrucke mit Hilfe wenigstens eines Scheuerrands geschützt werden sollen.

Die Position, Fläche und/oder Dicke des Scheuerrands lässt sich durch elektronisch gesteuerte Variation des Aufdrucks flexibel an bestimmte Flaschenformate, zugeordnete Etikettierungsschritte und/oder gegebenenfalls auch an den Abnutzungsgrad eines auszubessernden Scheuerrands anpassen.

Der Rumpfabschnitt ist insbesondere zylindrisch. Prinzipiell denkbar wären aber auch beispielsweise Flaschen mit elliptischem Rumpfquerschnitt, sofern ein geeigneter Druckabstand bei der Herstellung des Scheuerrands vollumfänglich eingehalten werden kann.

Vorzugsweise wird der Scheuerrand durch Auftrag, insbesondere Sprühauftrag, wasserbasierter Tinte, insbesondere von Latextinte, aufgedruckt. Dies reduziert potentiell gefährliche Lösungsmitteldämpfe und ermöglicht eine ausreichende Standzeit des Scheuerrands bei der Abfüllung, dem Transport und im Gebrauch.

Die Tinte eignet sich vorzugsweise für den Digitaldruck und ist beispielsweise eine dünnflüssig oder als Gel aufgebrachte Druckfarbe auf der Basis von Wasser, kann aber auch auf Wachs oder anderen Lösemitteln basieren.

Latextinten basieren auf Latexdispersionen, können aber auch Öle und/oder Prepolymere enthalten. Beim Aushärten verdunstet beispielsweise Wasser aus einer Latex-in-Wasser-Dispersion.

Vorzugsweise weist der aufgedruckte Scheuerrand eine Schichtdicke von 0,05 bis 0,50 mm, insbesondere von 0,15 bis 0,30 mm, auf. Dies ermöglicht einen praktikablen Scheuerschutz bei ausreichend schneller Produktion des Scheuerrands, beispielsweise zum Aufdruck und zur Aushärtung der Tinte.

Vorzugsweise wird die Schichtdicke durch einen mehrlagigen Aufdruck aufgebaut, insbesondere indem die Flaschen im Druckbereich wenigstens eines Druckkopfs bzw. beim Drucken mehrmals um sich selbst gedreht werden. Dies verbessert die Stabilität des Scheuerrands und erleichtert dessen flexible Anpassung an unterschiedliche Flaschenformate und/oder die jeweilige Oberflächenbeschaffenheit des Rumpfabschnitts.

Vorzugsweise wird der aufgedruckte Scheuerrand mittels Heißluft fixiert. Damit lassen sich insbesondere auf Glasflaschen besonders widerstandsfähige Scheuerränder auf der Basis aufgedruckter Latextinte herstellen.

Vorzugsweise wird der Rumpfabschnitt beim Aufdruck des Scheuerrands entlang einer geradlinigen oder kreisbogenförmigen Transportbahn transportiert und dabei um sich selbst gedreht. Dies erleichtert die Herstellung vollumfänglicher ringförmiger Scheuerränder.

Vorzugsweise wird der Scheuerrand von mehreren entlang der Transportbahn stationär hintereinander angeordneten Druckköpfen und/oder von wenigstens einem den Rumpfbereich / axialen Teilbereich beim Drucken begleitenden Druckkopf aufgedruckt. Dadurch können unterschiedliche Transportstrecken einer Abfüllanlage zum Aufdrucken von Scheuerrändern verwendet werden und ein bevorzugter schichtweiser Aufbau der Scheuerränder vergleichsweise einfach bewirkt werden.

Vorzugsweise werden die Flaschen von wenigstens zwei zu beiden Seiten der Transportbahn oberhalb und/oder unterhalb des axialen Teilbereichs am Rumpf der Flaschen anliegenden Riemen transportiert, und die Scheuerränder werden dabei von wenigstens einem auf Höhe des axialen Teilbereichs angeordneten Druckkopf aufgedruckt. Dies ermöglicht eine einfache Herstellung der Scheuerränder an geradlinigen Transportstrecken der Abfüllanlage.

Vorzugsweise unterscheidet sich die Laufgeschwindigkeit der Riemen auf der linken Seite der Transportbahn von derjenigen auf der rechten Seite, wodurch die Flaschen beim Transport in Drehung um sich selbst versetzt werden. Damit lassen sich Transportfunktion und kontinuierlich Drehlagenänderung der Flaschen auf einfache Weise gemeinsam bewirken.

Vorzugsweise umfasst der Rumpfabschnitt einen mittleren Teilbereich / Etikettierungsbereich zur Aufnahme eines Etiketts und/oder Etikettierungsaufdrucks. Ferner wird dann vorzugsweise ein erster Scheuerrand oberhalb und ein zweiter Scheuerrand unterhalb des mittleren Teilbereichs aufgedruckt. Damit lässt sich insbesondere der Etikettierungsbereich wirksam durch die Scheuerränder vor Scheuerdefekten schützen.

Die beschriebene Vorrichtung zum Herstellen von Flaschen mit Scheuerrändern umfasst ein Transportmittel zum Bereitstellen und Transportieren der Flaschen entlang einer Transportbahn und zum gleichzeitigen, wenigstens einmaligen und insbesondere mehrmaligen Drehen der Flaschen um sich selbst und wenigstens einen im Bereich der Transportbahn angeordneten Druckkopf.

Erfindungsgemäß sind das Transportmittel und der Druckkopf zum Aufdrucken der Scheuerränder auf wenigstens einen axialen Teilbereich eines Rumpfabschnitts der Flaschen mit einer im Radialschnitt im Wesentlichen ebenen Außenkontur ausgebildet. Damit lassen sich die bezüglich des Anspruchs beschriebenen Vorteile erzielen.

Vorzugsweise umfasst das Transportmittel ein Förderband zum stehenden Transport der Flaschen und beidseitig der Transportbahn angeordnete Riemen zum reibschlüssigen seitlichen Mitnehmen der Flaschen, wobei die Riemen mit unterschiedlicher Laufgeschwindigkeit angetrieben werden können, um die Flaschen im Bereich des Druckkopfs um sich selbst zu drehen. Damit lassen sich Transportfunktion und kontinuierlich Drehlagenänderung auf einfache Weise gemeinsam entlang einer geradlinigen Transportstrecke erzielen.

Vorzugsweise umfasst das Transportmittel einen drehbaren Behältertisch mit Drehtellern und zugeordneten Zentrierglocken zur Drehung der Behälter um sich selbst. Dies ermöglicht die Integration der Vorrichtung in eine Rundläufermaschine, beispielsweise in eine Etikettiermaschine, Direktdruckmaschine oder dergleichen.

Vorzugsweise umfasst die Vorrichtung mehrere entlang der Transportbahn angeordnete Druckköpfe zum insbesondere mehrlagigen Aufdruck einer wasserbasierenden Tinte, insbesondere einer Latextinte. Dadurch können an unterschiedlich verlaufenden Transportmitteln einer Abfüllanlage Scheuerrändern aufgedruckt und ein bevorzugter schichtweiser Aufbau der Scheuerränder vergleichsweise einfach bewirkt werden.

Vorzugsweise umfasst die Vorrichtung mehrere neben der Transportbahn übereinander, insbesondere oberhalb und unterhalb von Transportriemen für die Behälter, angeordnete Druckköpfe zum Aufdrucken von Scheuerrändern oberhalb und unterhalb eines am Rumpf der Behälter vorgesehenen Etikettierungsbereichs. Damit lässt sich insbesondere der Etikettierungsbereich vergleichsweise einfach und wirksam durch die Scheuerränder vor Scheuerdefekten schützen.

Vorzugsweise umfasst die Vorrichtung eine stromabwärts an den wenigstens einen Drucckopf anschließende Trocknungseinrichtung für den aufgedruckten Scheuerrand. Die Trocknungseinrichtung umfasst vorzugsweise einen Heißluft-Trocknungstunnel für wasserbasierte Tinte, insbesondere Latextinte.

Bevorzugte Ausführungsformen der Erfindung sind zeichnerisch dargestellt. Es zeigen:
- Fig. 1: eine mit Scheuerrand hergestellte Flasche;
- Fig. 2: einen Querschnitt durch eine erste Vorrichtung zum Herstellen der Flasche;
- Fig. 3: eine Draufsicht auf die erste Vorrichtung; und
- Fig. 4: einen Querschnitt durch eine zweite Vorrichtung zum Herstellen der Flasche.

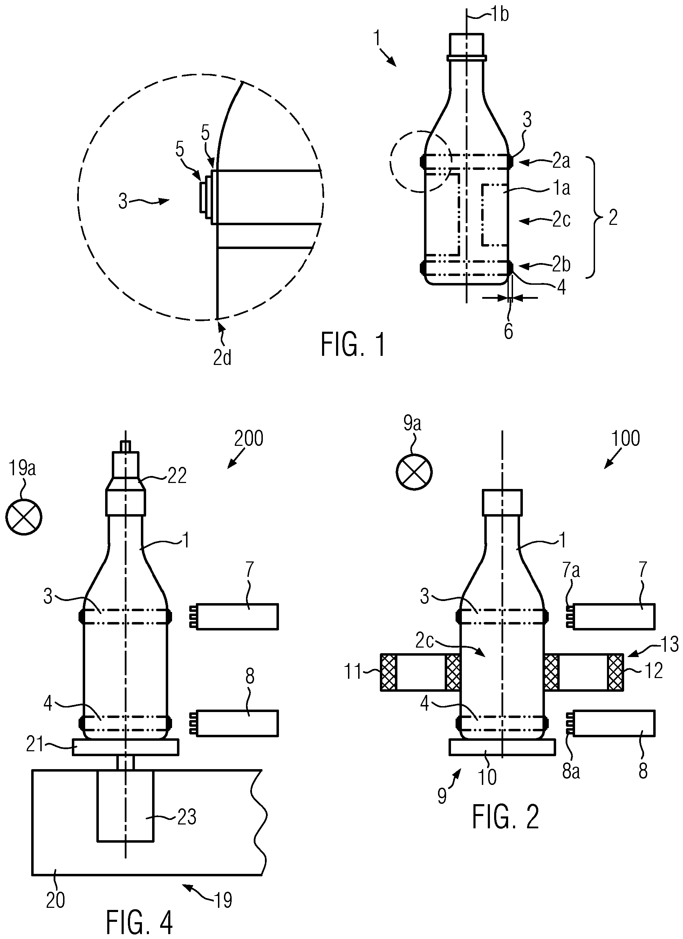

Die Fig. 1 zeigt schematisch eine wie beschrieben hergestellte Flasche 1, vorzugsweise aus Glas, mit einem im Wesentlichen zylindrischen Rumpfabschnitt 2 umfassend einen oberen axialen Teilbereich 2a, auf dem ein oberer Scheuerrand 3 aufgedruckt ist, einen unteren axialen Teilbereich2b, auf dem ein unterer Scheuerrand 4 aufgedruckt ist, und einen dazwischenliegenden mittleren axialen Teilbereich 2c im Sinne eines Etikettierungsbereichs zur Aufnahme eines Etiketts 1a und/oder eines Direktaufdrucks zum Zwecke der Kennzeichnung und/oder Dekoration der Flasche 1.

Die Außenkontur 2d des Rumpfabschnitts 2 ist in (gedachten) Radialschnitten bezüglich der Längsachse 1b der Flasche 1 jeweils im Wesentlichen eben und verläuft vertikal entsprechend seiner rotationssymmetrischen Zylinderform.

Die Scheuerränder 3, 4 werden vorzugsweise durch mehrschichtigen Auftrag, insbesondere Sprühauftrag, einer wasserbasierenden Tinte 5, insbesondere einer Latextinte, hergestellt und weisen nach Trocknung der Tinte 5 insgesamt eine Schichtdicke 6 von vorzugsweise von 0,05 bis 0,50 mm, insbesondere von 0,15 bis 0,30 mm, auf.

Die Tinte 5 ist in der Fig. 1 zum besseren Verständnis beispielhaft und nicht maßstäblich in Form mehrerer übereinanderliegender Druckschichten dargestellt.

Wie die Fig. 2 schematisch erkennen lässt, wird die Tinte 5 vorzugsweise von wenigstens einem oberen Druckkopf 7 aus selektiv auf den oberen axialen Teilbereich 2a gerichteten Druckdüsen 7a und von wenigstens einem unteren Druckkopf 8 aus selektiv auf den unteren axialen Teilbereich 2b gerichteten Druckdüsen 8a in seitlicher Richtung ausgestoßen.

Die Druckköpfe 7, 8 sind im Bereich eines Transportmittels 9 seitlich dessen geradliniger Transportbahn 9a angeordnet. Das Transportmittel 9 umfasst vorzugsweise ein Förderband 10 zum stehenden Transport der Flaschen 1 entlang der Transportbahn 9a und beidseitig der Transportbahn 9a angeordnete Riemen 11, 12, die den Rumpfabschnitt 2 vorzugsweise im mittleren axialen Teilbereich 2c / Etikettierungsbereich reibschlüssig mitnehmen.

Die Riemen 11, 12 sind insbesondere auf der Höhe des mittleren axialen Teilbereichs 2c so angeordnet, dass sie die Scheuerränder 3, 4 beim Aufdrucken nicht berühren.

Die Riemen 11, 12 können beispielsweise Zahnriemen sein und gegebenenfalls auf ihrer Außenseite eine nachgiebige, insbesondere auch offenporige Kontaktschicht 13 aufweisen, beispielsweise in Form eines am Riemen 11, 12 jeweils umlaufenden Schwamms.

Die Riemen 11, 12 könnten auch jeweils aus mehreren übereinander angeordneten und synchron zueinander laufenden Riemen zusammengesetzt sein.

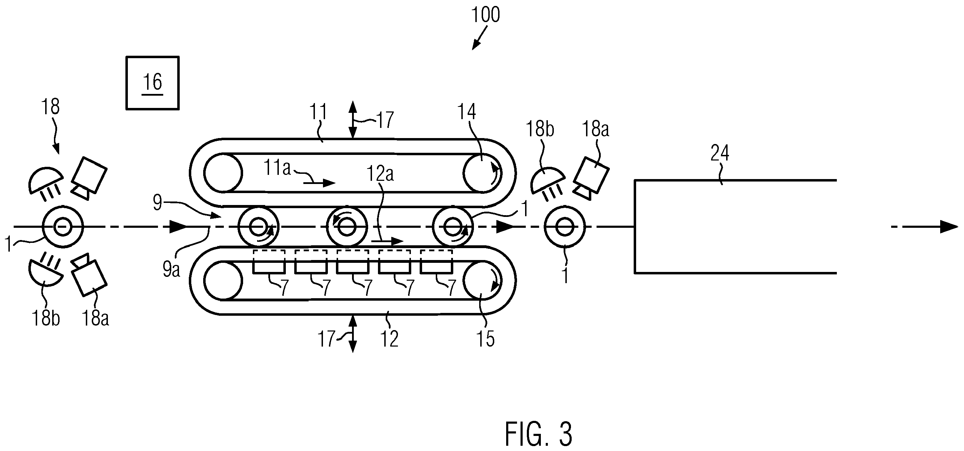

Wie die Fig. 3 in der schematischen Draufsicht erkennen lässt, sind die Druckköpfe 7, 8 und das Transportmittel 9 Bestandteile einer Vorrichtung 100 vom Geradläufertyp zum Herstellen der Flaschen 1 einschließlich der Scheuerränder 3, 4.

Die Vorrichtung 100 umfasst ferner Umlenkrollenantriebe 14, 15 für die Riemen 11, 12, vorzugsweise mit je einem unabhängig ansteuerbaren Servomotor (nicht dargestellt). Den Servomotoren ist dann eine gemeinsame elektronische Steuereinheit 16 zugeordnet.

Dies ermöglicht unterschiedliche Laufgeschwindigkeiten 11a, 12a der Riemen 11, 12. Beispielsweise läuft dann im Arbeitsbetrieb einer der Riemen 11, 12 um 10 bis 30 % schneller als der andere und vorzugsweise zudem einer der Riemen 11, 12 synchron mit dem Förderband 10.

Durch die unterschiedlichen Laufgeschwindigkeiten 11a, 12a der Riemen 11, 12 lassen sich die Flaschen 1 im Bereich der Druckköpfe 7, 8 während des Transports wenigstens einmal um sich selbst (um ihre Längsachse 1b) drehen, vorzugsweise wenigstens 1,3-mal, und bei einer besonders günstigen Variante wenigstens 1,5-mal um sich selbst.

Denkbar wäre auch, den Druckköpfen 7, 8 entgegengesetzt zusätzliche Druckköpfe (nicht dargestellt) anzuordnen, beispielsweise um 180° versetzt. Die Flaschen müssten dann nur wenigstens 0,5-mal wie oben beschrieben um sich selbst gedreht werden. Solche zusätzlichen Druckköpfe könnten auch vorgesehen sein, um den Druckauftrag zu beschleunigen / zu verstärken und/oder die Maschinenleistung zu erhöhen.

Die Fig. 3 zeigt zudem, dass die Vorrichtung 100 vorzugsweise mehrere entlang der Transportbahn 9a hintereinander angeordnete obere Druckköpfe 7 und untere Druckköpfe 8 (in der Fig. 3 verdeckt) zur Herstellung der Scheuerränder 3, 4 umfasst. Dies erleichtert den vollumfänglichen Aufdruck der Tinte 5 und insbesondere einen mehrlagigen Aufdruck der Tinte 5 zur Herstellung der Scheuerränder 3, 4.

Unter einem mehrlagigen Aufdruck ist zu verstehen, dass der gesamte Umfang des jeweiligen axialen Teilbereichs 2a, 2b aufgrund der Drehung der Flaschen 1 um sich selbst beim Transport mehrmals hintereinander wenigstens einem Druckkopf 7, 8 zugewandt ist und bei jeder Umdrehung mit einer Lage der Tinte 5 beschichtet wird.

Hierbei könnten sich die Lagen der Tinte 5 auch sukzessive in radialer Richtung verjüngen, um optisch ansprechende und/oder mechanisch widerstandsfähige Übergänge zu den Scheuerrändern 3, 4 herzustellen.

Der Druckkopf 7 und/oder 8 muss nicht zwingend einen umfänglich durchgehendem Scheuerrand 3, 4 erzeugen, es könnte auch ein umfänglich mehrfach unterbrochenes Scheuerrandmuster (nicht dargestellt) aufgedruckt werden, beispielsweise im Sinne einer gepunkteten und/oder gestrichelten Linie. Dadurch ließe sich Tinte 5 oder dergleichen Auftragsmittel, wie beispielsweise Lack, einsparen.

Ebenfalls denkbar wäre die Erzeugung des Scheuerrands 3, 4 in Form eines Wellenmusters, Zickzackmusters oder dergleichen. Hierzu könnte sich der Druckkopf 7 und/oder 8 beim Druck regelmäßig auf und ab bewegen, oder dessen Düsen würden dann entsprechend angesteuert. Dies könnte insbesondere bei Ausdehnung von Flaschen 1 aus Kunststoff wegen der verbesserten Elastizität solcher Scheuerränder vorteilhaft sein.

Die Vorrichtung 100 kann ferner (schematisch durch Pfeile angedeutete) Lineareinheiten 17 zur Querverstellung der Riemen 11, 12 aufweisen, um deren Abstand zueinander an den Durchmesser der zu bedruckenden Flaschen 1 anzupassen.

Denkbar ist beispielsweise eine motorische Querverstellung mittels der Steuereinheit 16 infolge einer rechnergestützten Gebinde-Sortenvorwahl oder über eine stromaufwärts angeordnete Inspektionseinheit 18 mit wenigstens einer Kamera 18a und wenigstens einer Beleuchtung 18b für die Flaschen 1.

Die Figur 4 zeigt schematisch eine als Rundläufer ausgebildete Vorrichtung 200 zur Herstellung von Flaschen 1 mit Scheuerrändern 3, 4. Die Vorrichtung 200 kann ansonsten dieselben Funktionen hinsichtlich der Drehung der Flaschen 1 um sich selbst bei deren Transport entlang stationärer Druckköpfen 7, 8 aufweisen wie die Vorrichtung 100 vom Geradläufertyp.

Demnach umfasst die Vorrichtung 200 ein Transportmittel 19 mit einem im Arbeitsbetrieb kontinuierlich rotierenden Behältertisch 20, Drehtellern 21 und zugeordneten Zentrierglocken 22 zum Einspannen und Drehen der Flaschen 1. Die Drehteller 21 sind vorzugsweise von individuell steuerbaren Servomotoren 23 angetrieben.

Die Druckköpfe 7, 8 können dann entsprechend entlang der kreisbogenförmigen Transportbahn 19a des Transportmittels 19 in mehrfacher Ausführung hintereinander stationär angeordnet werden, um die Scheuerränder 3 ,4 wie prinzipiell zuvor beschrieben aufzudrucken.

Die Vorrichtungen 100, 200 können jeweils ferner eine stromabwärts der Druckköpfe 7, 8 angeordnete Trocknungseinheit 24 zum Aushärten der aufgedruckten Scheuerränder 3 ,4 umfassen, insbesondere in Form eines Trockentunnels. Ein solcher eignet sich besonders für wasserbasierende Latex-Tinte auf Glasflaschen. Dies ist beispielhaft in der Fig. 3 angedeutet.

Der aufgedruckte und ausgehärtete Scheuerrand 3, 4 schützt dann eine nachfolgend insbesondere im mittleren Rumpfbereich 2c angebrachte Dekoration der Flaschen 1 mittels der Etiketten 1a oder auch Direktdruck vor mechanischer Beschädigung beim Transport der Flaschen 1.

Die Flaschen 1 können prinzipiell Einwegflaschen oder Mehrwegflaschen sein. Im Gegenteil zu von verdicktem Wandmaterial an Flaschen ausgebildeten Scheuerrändern, die erheblichen Materialaufwand verursachen und zu Spannungsrissen führen können, lässt sich der aufgedruckte Scheuerrand 3, 4 insbesondere durch mehrlagigen Tintenauftrag effizient und flexibel anpassbar auch nachträglich an den Flaschen 1 herstellen.

Prinzipiell könnten entsprechende Scheuerränder auch an Vorformlingen erzeugt werden (nicht dargestellt). Hierfür eignet sich insbesondere ein geradliniger Transport, beispielsweise ein Lufttransport. Die Vorformlinge könnten dann an ihren Tragringen geführt werden, sodass der zylindrische Rumpf der Vorformlinge frei zugänglich ist. Entsprechende Riemen zur Drehung der Vorformlinge um sich selbst könnten auf Höhe der späteren Verschlussbereiche über den Tragringen reibschlüssig ansetzen.

Der Aufdruck wenigstens eines Scheuerrands erfolgt dann vorzugsweise wiederum über eine Vielzahl entlang der jeweiligen Transportbahn angeordneter Druckköpfe, die auf den zylindrischen Teil der Vorformlinge gerichtet sind in Anlehnung an den beschriebenen Aufdruck auf die Flaschen 1, also beispielsweise mit Latextinte.

Die Scheuerränder 3, 4 könnten auch zum Zwecke der Auffrischung / Ausbesserung an benutzten Mehrwegflaschen auf bereits vorhandene Scheuerränder gedruckt werden.

Die einlaufenden Flaschen 1 können hierfür zunächst inspiziert werden, beispielsweise indem die Seitenflächen der Flaschen 1 über wenigstens eine LED-Beleuchtung 18b ausgeleuchtet und über wenigstens eine Inspektionseinheit, insbesondere eine CCD-Kamera 18a, mit einer geeigneten Steuereinheit 16 dahingehend erfasst werden, ob und in welchen Bereich bereist Scheuerränder an den Flaschen 1 vorhanden sind.

Wenn Scheuerränder vorhanden sind, werden über die Steuereinheit 16 wenigstens an einem Druckkopf 7, 8 diejenigen Düsen 7a, 8a aktiviert, die auf Höhe der Scheuränder angeordnet sind, um die Scheuerränder 3, 4 im Sinne eines Überdruckens anzubringen.

Nachgeordnet ist eine weitere Inspektionseinheit 18 umfassend eine LED-Beleuchtung 18b und CCD- Kamera 18a möglich. Sollten Flaschen 1 als fehlerhaft erkannt werden, kann beispielsweise die erzeugte Schichtdicke 6 der Tinte 5 geeignet angepasst werden.

Fehlerhaft / unzureichend bedruckte Flaschen 1 können zudem auf prinzipiell bekannte Weise ausgeschleust werden.

Ebenfalls denkbar wäre die beschriebene Herstellung der Scheuerränder 3, 4 auf bereits etikettierte Flaschen 1 stromabwärts einer Etikettiermaschine, einer Füllmaschine, eines entsprechenden Maschinenblocks oder dergleichen.

Latex-Tinten können neben wasserlöslichen, synthetischen Polymeren (dem Latex) bekannte Bestandteile wasserbasierter Tinten umfassen, wie beispielsweise neben Wasser auch Glykol und Farbpigmente. Darüber hinaus können Latex-Tinten mit Wasser mischbare Lösungsmittel-Feststoffe enthalten, die dafür sorgen, dass die Latex-Tinte mit Hilfe eines Heiz- und Belüftungssystems aushärtet. Dies ermöglicht eine haltbare Schicht, die die Latex-Tinte fest mit der Flaschenoberfläche verbindet.

Da die mit Wasser mischbaren Lösungsmittel-Feststoffe geringe Dampfdrücke aufweisen, erzeugen die Latex-Tinten geruchsneutrale und schwer entflammbare Scheuerränder 3, 4. Aufwändige Abluftanlagen bei der Verarbeitung erübrigen sich dadurch.

Wasserbasierte Tinten / Latex-Tinten lassen sich beispielsweise mit Druckköpfen zum Direktdruck auf Flaschen und/oder mit Druckköpfen zum Bedrucken von Etiketten mit Leim (Leimspritzen) für die Kaltleimetikettierung auf den Flaschen 1 auftragen.

Neben einem derartigen kontaktlosen Sprühauftrag der Scheuerränder 3, 4 wäre auch ein kontaktierender Druck prinzipiell denkbar, beispielsweise mittels der Riemen 11, 12, die dann eine offenporige Schicht 13 zum Auftrag der Tinte 5 umfassen könnten. Die Riemen 11, 12 wäre dann auf Höhe der Scheuerränder 3, 4 anzuordnen. Je nach Elastizität der offenporigen Schicht 13 und der Viskosität der Tinte 5 könnten so gegebenenfalls Scheuerränder 3, 4 mit geeigneter Schichtdicke 6 aufgedruckt werden, insbesondere mit Latex-Tinten.

Denkbar wäre prinzipiell auch ein Aufdruck von Scheuerrändern 3, 4 aus UV-vernetzter Tinte. Entsprechend wäre dann stromabwärts ein UV-Tunnel zur Aushärtung solcher Tinten vorzusehen.

Die beschriebene Herstellung von Scheuerändern 3, 4 durch Aufdrucken auf Flaschen 1 lässt sich an unterschiedlichen Transportmitteln / Transportstrecken einer Abfüllanlage durchführen. Entsprechende Vorrichtungen 100, 200 können daher auch auf flexible Weise nachgerüstet werden.

Im Arbeitsbetrieb können die Flaschen 1 als kontinuierlicher Produktstrom während des linearen oder bogenförmig umlaufenden Transports mit jeweils wenigstens einem Scheuerrand 3, 4 bedruckt und so vor mechanischen Beschädigungen durch Kollision mit anderen Flaschen 1 oder Führungselementen geschützt werden.

## Patentansprüche

1. Verfahren zum Herstellen von Flaschen mit Scheuerrändern, wobei man Flaschen (1), insbesondere solche aus Glas, umfassend einen Rumpfabschnitt (2) mit einer im Radialschnitt im Wesentlichen ebenen Außenkontur bereitstellt, **dadurch gekennzeichnet, dass** man wenigstens einen umfänglich verlaufenden Scheuerrand (3, 4) in einem axialen Teilbereich (2a, 2b) des Rumpfabschnitts aufdruckt.

2. Verfahren nach Anspruch 1, wobei der Scheuerrand (3, 4) durch Auftrag, insbesondere Sprühauftrag, wasserbasierter Tinte (5), insbesondere von Latextinte, aufgedruckt wird.

3. Verfahren nach Anspruch 1 oder 2, wobei der aufgedruckte Scheuerrand (3, 4) eine Schichtdicke (6) von 0,05 bis 0,50 mm, insbesondere von 0,15 bis 0,30 mm, aufweist.

4. Verfahren nach Anspruch 3, wobei die Schichtdicke (6) durch einen mehrlagigen Aufdruck aufgebaut wird, insbesondere indem die Flaschen (1) im Druckbereich wenigstens eines Druckkopfs (7, 8) mehrmals um sich selbst gedreht werden.

5. Verfahren nach wenigstens einem der vorigen Ansprüche, wobei der aufgedruckte Scheuerrand (3, 4) mittels Heißluft fixiert wird.

6. Verfahren nach wenigstens einem der vorigen Ansprüche, wobei der axiale Teilbereich (2a, 2b) beim Aufdruck des Scheuerrands (3, 4) entlang einer geradlinigen oder kreisförmigen Transportbahn (9a, 19a) transportiert und dabei um sich selbst gedreht wird.

7. Verfahren nach Anspruch 6, wobei der Scheuerrand (3, 4) von mehreren entlang der Transportbahn (9a, 19a) stationär hintereinander angeordneten Druckköpfen (7, 8) und/oder von wenigstens einem den axialen Teilbereich begleitenden Druckkopf aufgedruckt wird.

8. Verfahren nach Anspruch 6 oder 7, wobei die Flaschen (1) von wenigstens zwei zu beiden Seiten der Transportbahn (9a) oberhalb und/oder unterhalb des axialen Teilbereichs (2a, 2b) an den Flaschen (1) anliegenden Riemen (11, 12) transportiert werden und die Scheuerränder (3, 4) dabei von wenigstens einem auf Höhe des axialen Teilbereichs angeordneten Druckkopf (7, 8) aufgedruckt werden.

9. Verfahren nach Anspruch 8, wobei sich die Laufgeschwindigkeit (11a, 12a) der Riemen (11, 12) auf der linken Seite der Transportbahn (9a) von derjenigen auf der rechten Seite unterscheidet und die Flaschen (1) dadurch beim Transport in Drehung um sich selbst versetzt werden.

10. Verfahren nach wenigstens einem der vorigen Ansprüche, wobei der Rumpfabschnitt (2) einen Etikettierungsbereich zur Aufnahme eines Etiketts (1a) und/oder Etikettierungsaufdrucks umfasst und ein erster Scheuerrand (3) oberhalb und ein zweiter Scheuerrand (4) unterhalb des Etikettierungsbereichs aufgedruckt wird.

11. Vorrichtung (100, 200) zum Herstellen von Flaschen mit Scheuerrändern: ein Transportmittel (9, 19) zum Bereitstellen und Transportieren der Flaschen (1) entlang einer Transportbahn (9a, 19a) und zum gleichzeitigen, wenigstens einmaligen und insbesondere mehrmaligen Drehen der Flaschen um sich selbst; und wenigstens einen im Bereich der Transportbahn angeordneten Druckkopf (7, 8), **dadurch gekennzeichnet, dass** der das Transportmittel und der Druckkopf zum Aufdrucken der Scheuerränder (3, 4) auf einen axialen Teilbereich (2a, 2b) eines Rumpfabschnitts (2) der Flaschen mit einer im Radialschnitt im Wesentlichen ebenen Außenkontur ausgebildet sind.

12. Vorrichtung nach Anspruch 11, wobei das Transportmittel (9) ein Förderband (10) zum stehenden Transport der Flaschen (1) und beidseitig der Transportbahn (9a) angeordnete Riemen (11, 12) zum reibschlüssigen seitlichen Mitnehmen der Flaschen umfasst, und wobei die Riemen mit unterschiedlicher Laufgeschwindigkeit (11a, 12a) angetrieben werden können, um die Flaschen im Bereich des Druckkopfs (7, 8) um sich selbst zu drehen.

13. Vorrichtung nach Anspruch 11, wobei das Transportmittel (19) einen kontinuierlich drehbaren Behältertisch (20) mit Drehtellern (21) und zugeordneten Zentrierglocken (22) zur Drehung der Behälter (1) um sich selbst umfasst.

14. Vorrichtung nach einem der Ansprüche 11 bis 13, mit mehreren entlang der Transportbahn (9a, 19a) angeordneten Druckköpfen (7, 8) zum insbesondere mehrlagigen Aufdruck einer wasserbasierenden Tinte (5), insbesondere einer Latextinte.

15. Vorrichtung nach einem der Ansprüche 11 bis 14, mit mehreren neben der Transportbahn (9a, 19a) übereinander, insbesondere oberhalb und unterhalb von Riemen (12) zum Transport der Flaschen (1), angeordneten Druckköpfen (7, 8) zum Aufdrucken von Scheuerrändern (3, 4) oberhalb und unterhalb eines zur Etikettierung vorgesehenen mittleren Teilbereichs (2c) des Rumpfabschnitts (2).
